# EUROPÄISCHE PATENTSCHRIFT

(11) **EP 2 558 894 B1**
(45) Veröffentlichungstag und Bekanntmachung des Hinweises auf die Patenterteilung: **09.10.2019**
(21) Anmeldenummer: 11714055.8
(22) Anmeldetag: 13.04.2011
(51) Int. Cl.: G02B 6/38

(54) **OPTISCHER VERBINDER**
OPTICAL CONNECTOR
COUPLEUR OPTIQUE

(30) Priorität: 13.04.2010 CH 532102010
(43) Veröffentlichungstag der Anmeldung: 20.02.2013
(73) Patentinhaber: HUBER+SUHNER AG, 9100 Herisau (CH)
(72) Erfinder: SCOPIC, Nesa, 9100 Herisau (CH); ZAINA, Patrick, 9200 Gossau (CH); GADMER, Leif, 9240 Uzwil (CH)
(74) Vertreter: Rentsch Partner AG
(86) Internationale Anmeldenummer: PCT/EP2011/055824
(87) Internationale Veröffentlichungsnummer: WO 2011/128375

(56) Entgegenhaltungen:
- EP-A1- 0 599 784
- EP-A1- 2 128 675
- US-A- 5 082 344
- US-A- 5 230 032
- US-A- 5 940 561
- US-B1- 6 227 719

## Beschreibung

Die vorliegende Erfindung liegt auf dem Gebiet der optischen Verbinder.

In Hausinstallationen werden Verbindungen zwischen Parabolantennen und den Satellitenempfängern bisher mit koaxialen Leitungen ausgeführt. Vorteile dieser Verbindungen bestehen in der Robustheit und der sicheren Übertragung selbst bei stark schwankenden Umweltbedingungen, wie z.B. Temperatur und Feuchtigkeit. Längere koaxiale Verbindungsleitungen sind nicht verlustarm und zudem relativ aufwendig zum Verlegen, da die Kabel- und Verbinderdurchmesser erheblich sind. Die Verbinderbestückung findet in der Regel nach der Verlegung des Kabels statt. Vielfach sind mehr als ein Koaxialkabel erforderlich, da diese Technologie pro Empfangsteil nur ein Signal übertragen kann. Bei einer Hausinstallation mit mehreren Wohnungen sind daher im Extremfall pro Wohnung ein Kabel erforderlich. Insbesondere beim Nachrüsten in bestehenden Gebäuden stellt dies ein erhebliches Problem dar, da häufig kein Platz für das Verlegen der Kabel vorhanden ist.

Aus der WO05114879 ist z.B. eine Vorrichtung bekannt, um mehrere TV-Kanäle von einer Parabolantenne zu einem Empfänger zu leiten. Die Lösung basiert auf mehreren koaxialen Kabeln.

US4842363 von der Fa. Amphenol Corp. wurde 1989 publiziert und zeigt einen optischen Verbinder mit einer starr in einem Grundkörper angeordneten Ferrule. Der Verbinder kann über eine auf dem Grundkörper angeordnete Schraubhülse mit einem Gegenstück wirkverbunden werden.

EP0784218 der Fa. Sumitomo Electric Ind. wurde 1997 publiziert und beschreibt einen optischen Verbinder. Verbinderseitig ist eine Ferrule starr oder gegen die Kraft einer Feder axial verschiebbar angeordnet. Ein Nachteil besteht darin, dass der Verbinder einen vergleichsweise komplizierten Aufbau aufweist.

US4711517 des Erfinders Vernon Fentress wurde 1987 publiziert und beschreibt einen optischen Verbinder mit einem vergleichsweise einfachen Aufbau. Die Ferrule ist in einen Grundkörper integriert. Auf dem Grundkörper ist eine Schraubhülse angeordnet, welche zum Verriegeln des Verbinders gegenüber einem Gegenstück dient.

EP0395491 der Fa. Radiall AG wurde 1990 publiziert und betrifft einen optischen Verbinder mit einem vergleichsweise komplizierten Aufbau. Der Verbinder wird über eine bajonettförmige Verriegelung an einem Gegenstück befestigt.

EP0131488 wurde 1985 im Namen des Commissariat a l'Energie Atomique publiziert und betrifft einen optischen Verbinder mit einem gegen die Kraft einer Feder verschiebbaren Ferrulenhalter. Der Verbinder wird über eine Gewindehülse mit einem Gegenstück wirkverbunden. Der Verbinder weist einen komplizierten Aufbau mit einem vergleichsweise grossen Aussendurchmesser auf.

WO2009/130160 von der selben Anmelderin wurde 2009 publiziert und betrifft einen optischen Verbinder mit einem geringen Aussendurchmesser. Der Verbinder weist steckerseitig einen starr angeordneten Ferrulenhalter auf. Buchsenseitig ist der Ferrulenhalter gegen die Kraft einer Feder verschiebbar gelagert. Aufgrund des geringen Aussendurchmessers eignet sich der Verbinder für Hausinstallationen und zum nachträglichen Einziehen in bestehende Rohre.

US 5 082 344 A zeigt einen Verbinder mit einem kabelseitigen ersten und einem gehäuseseitigen zweiten Verbinderteil. Der kabelseitige erste Verbinderteil weist aktive erste Wirkverbindungsmittel auf, sowie eine Ferrule, welche gegen die Kraft einer Feder in Längsrichtung verschiebbar gelagert ist. Der gehäuseseitige zweite Verbinderteil weist aktive Wirkverbindungsmittel auf, welche im Innern des Gehäuses des zweiten Verbinderteils angeordnet sind.

US 5 230 032 A zeigt einen Verbinder mit einem ersten Verbinderteil und einem zweiten Verbinderteil. Der erste Verbinderteil weist zwei Nocken und somit passive Wirkverbindungsmittel auf, welche beim Zusammenstecken mit zwei Wippen und somit aktiven Wirkverbindungsmittel des zweiten Verbinderteils zusammenwirken. Der erste Verbinderteil weist eine Öffnung auf, in welche der zweite Verbinderteil einsteckbar ist. Der erste Verbinderteil weist eine von einer Feder vorgespannte Ferrule auf.

US 6 227 719 B1 zeigt einen Verbinder mit einem kabelseitigen ersten und einem gehäuseseitigen zweiten Verbinderteil. Es sind passive Wirkverbindungsmittel am gehäuseseitigen zweiten Verbinderteil und aktive Wirkverbindungsmittel am kabelseitigen ersten Verbinderteil vorgesehen.

EP 0 599 784 A1 zeigt einen Verbinder mit einem kabelseitigen ersten und einem gehäuseseitigen zweiten Verbinderteil. Der kabelseitige erste Verbinderteil weist aktive Wirkverbindungsmittel auf, sowie eine Ferrule. Der gehäuseseitige zweite Verbinderteil weist ebenfalls aktive Wirkverbindungsmittel auf, welche im Innern des Gehäuses des zweiten Verbinderteils angeordnet sind.

Für die Übertragung von Daten in Heimnetzen mit vergleichsweise niedriger Bandbreite sind von verschiedenen Anbietern optische Systeme bekannt, die auf lichtleitenden Kunststofffasern (Lichtwellenleiter) beruhen. Diese werden in der Regel vor Ort auf ihre Länge zugeschnitten und dann mit Verbindern bestückt oder direkt in einen Medienkonverter eingeführt. Für den professionellen Einsatz, wo eine sichere Verbindung bei stark schwankenden Umweltbedingungen über einen Zeitraum von mehreren Jahren sichergestellt werden muss, eignen sich diese Systeme nicht. Ein weiterer Nachteil besteht in der systembedingt beschränkten Datenübertragungsrate.

Z.B. preist die Fa. Homefibre auf ihrer Homepage www.homefibre24.com Systeme zur Übertragung von Daten über Lichtwellenleiter aus Kunststoff an. Leider sind in diesem Zusammenhang nur wenig Informationen verfügbar. Auch hier scheinen die optischen Fasern direkt und ohne Steckverbinder in den Konverter eingeführt zu werden.

Ein weiterer Anbieter ist die Fa. DieMount GmbH. Auf der Homepage www.diemount.de bietet diese ein System für die Heimvernetzung an. Die optischen Fasern werden dabei an ihren Enden mit einem Messer oder einer Schere abgelängt, um dann direkt in einen Medienkonverter eingeführt zu werden. Die Verbindungen, die mit den sehr rudimentär bearbeiteten Fasern hergestellt werden, garantieren keine sichere Datenübertragung über einen längeren Zeitraum.

Ein weiterer Anbieter von optischen Kabeln und Verbindern ist die Fa. Ratioplast Optoelectronics GmbH. Diese bietet auf ihrer Homepage www.ratioplast.com diverse Produkte an, welche für die Übertragung von Daten über Lichtleiter dienen.

Ein Nachteil der bekannten Systeme und Vorrichtungen besteht darin, dass sie sich u. a. infolge der mangelnden oder gar nicht vorhandenen Dichtung nicht für den Ausseneinsatz eignen und zudem die Datenübertragung fehleranfällig und starken Schwankungen unterworfen ist, da die Kopplung zwischen Konverter und Fasern nicht immer genügend ist. Ein weiterer Nachteil besteht darin, dass die Feldbestückung der optischen Fasern mit Verbindern in der Regel aufwendig ist und auch hier nicht sicher gestellt werden kann, dass die erforderliche Kopplung stimmt, da die Enden der Lichtwellenleiter nicht plan aufeinander liegen. Ausserdem eignen sich die für Lichtwellenleiter aus Kunststoff geschaffenen Systeme nicht für den Einsatz mit den wesentlich leistungsfähigeren Glasfasern.

Eine Aufgabe der Erfindung besteht darin, einen optischen Verbinder zu zeigen, welcher sich als Alternative zu den aus dem Stand der Technik bekannten koaxialen Verbindungen z.B. zwischen Parabolantennen und Empfängern oder im Bereich von Fibre-to-Home Anwendungen eignet.

Eine weitere Aufgabe der Erfindung besteht darin, einen optischen Verbinder zu zeigen, welcher professionellen Standards mit einer hohen Datenübertragungsrate über einen längeren Zeitraum eignet.

Eine weitere Aufgabe der Erfindung besteht darin, einen optischen Verbinder zu zeigen, welcher sich für den nachträglichen Einbau in bestehende Gebäude mit beschränkten Platzverhältnissen eignet.

Diese Aufgabe wird durch die in den Patentansprüchen definierte Vorrichtung gelöst.

Von der selben Anmelderin ist aus WO2009/130160 ein faseroptischer Verbinder bekannt, welcher einen geringen Aussendurchmesser aufweist und sich z.B. für die nachträgliche Installation in einem bestehenden Gebäude eignet.

Die vorliegende Erfindung offenbart eine verbesserte Ausführungsform eines faseroptischen Verbinders, welcher einen einfachen Aufbau, eine verbesserte Konnektivität insbesondere zwischen zwei Verbindern und sich aufgrund seines geringen Aussendurchmessers für den Einzug in bestehende Gebäudeinstallationen eignet.

Faseroptische Verbindungen, obwohl technisch vorteilhaft, kommen bisher im Heimbereich nach wie vor wenig zum Einsatz, um Daten über einen Lichtwellenleiter zwischen einer im Freien angebrachten Parabolantenne und einem im Gebäudeinnern angeordneten Satellitenempfänger zu übertragen. Ein Grund besteht darin, dass sich die herkömmlichen Steckverbinderlösungen - abgesehen von der aus WO2009/130160 bekannten Variante - für diese Anwendung nur ungenügend eignen oder aus wirtschaftlicher Sicht zu teuer sind. Häufig sind die bekannten Verbinder zu gross oder weisen einen zu komplizierten Aufbau auf. Aus diesem Grund eignen sie sich beispielsweise nicht für das nachträgliche Einziehen in Kabelrohre in bestehenden Gebäuden.

Diese Probleme löst die Erfindung durch einen kompakten und äusserst robusten faseroptischen Verbinder, der vergleichsweise geringe Aussenabmessungen aufweist, so dass der Verbinder ohne Feldbestückung direkt am Kabel montiert verlegt zu werden. Bestückt an einem Lichtwellenleiter kann der Verbinder zusammen mit diesem in bestehende Kabelrohre mit geringen Platzverhältnissen eingezogen werden. Aufgrund der hohen Präzision eignet sich der Verbinder bevorzugt für die Verwendung mit Lichtwellenleitern aus Glas, kann aber auch für den Einsatz mit Lichtwellenleitern aus Kunststoff vorgesehen werden.

Die für den Kontaktdruck erforderliche Mechanik ist bevorzugt in den kabelseitigen Verbinderteil integriert. Das Gehäuse des kabelseitigen Verbinderteils wird in der Regel aus Metall gefertigt, kann aber zumindest bereichsweise auch aus Kunststoff bestehen. Der kabelseitige Verbinder kann über eine Verriegelungsmechanik mit einem Verbindergegenstück wirkverbunden werden. Um den Aussendurchmesser gering halten zu können, ist der aktive, bewegliche Teil der Verriegelungsmechanik mit Vorteil ins gehäuseseitige Verbindergegenstück integriert. Der kabelseitige Verbinder weist hingegen nur passive Wirkverbindungsmittel auf, damit er mit der Verriegelungsmechanik wirkverbunden werden kann.

In einer Ausführungsform weist der optische Verbinder einen ersten und einen zweiten Verbinderteil auf, wobei der erste Verbinderteil zur kabelseitigen und der zweite Verbinderteil zur gehäuseseitigen Montage vorgesehen wird. Einer oder mehrere zweite Verbinderteile können auch in eine Adapterkupplung (Adapter) integriert sein, mittels welcher mehrere erste Verbinderteile wirkverbunden werden können.

In einer Ausführungsform weist der kabelseitige erste Verbinderteil einen Grundkörper mit einer in Längsrichtung verlaufenden, durchgehenden Öffnung auf, die zur Aufnahme eines Lichtwellenleiters dient. Am hinteren Ende weist der Grundkörper einen Crimphals auf, an dem ein Kabelmantel eines Kabels über eine Crimphülse befestigt werden kann. Gegen das vordere Verbinderende hin ist die durchgehende Öffnung im Innern des Grundkörpers so ausgestaltet, dass sie zur Aufnahme und axialen Führung eines Ferrulenhalters und einer daran befestigten Ferrule geeignet ist. Die Ausgestaltung ist dabei mit Vorteil so gewählt, dass eine sich negativ auswirkende axiale Drehung der Ferrule gegenüber dem Grundkörper vermieden wird. Zwischen dem Ferrulenhalter und dem Grundkörper ist eine Feder angeordnet, welche u.a. zur Erzeugung des notwendigen Kontaktdruckes dient. Der Grundkörper des ersten Verbinderteils weist im Bereich des vorderen Endes einen in etwa zylindrischen Aussenbereich auf, der so ausgestaltet ist, dass er in eine dafür vorgesehene Halterung am zweiten Verbinderteil eingesteckt und mittels einer Verriegelung verriegelt werden kann. Die Ausgestaltung vermeidet stark über den Hauptdurchmesser des Innenteils vorstehende Elemente, die ein Einziehen in ein bestehendes Kabelrohr behindern könnten.

In einer Ausführungsform weist der optische Verbinder mindestens einen kabelseitigen ersten und einen gehäuseseitigen zweiten Verbinderteil auf, welche zum stirnseitigen Wirkverbinden von zwei Lichtwellenleitern dienen. Der kabelseitige erste Verbinderteil weist einen Grundkörper mit einem passiven ersten Wirkverbindungsmittel und einer in einer Längsrichtung des Grundkörpers durchgehenden Öffnung auf. In dieser Öffnung ist eine Ferrule angeordnet, welche gegen die Kraft einer Feder in Längsrichtung verschiebbar gelagert ist. Die Feder stützt sich im Innern des Grundkörpers an einer nach innen vorstehenden Schulter ab, welche durch eine Querschnittsverengung resultiert. Der gehäuseseitige zweite Verbinderteil weist im Unterschied dazu mindestens ein aktives Wirkverbindungsmittel auf, welches in montiertem Zustand zum Ver- bzw. Entriegeln mit den ersten Wirkverbindungsmitteln korrespondiert. In einer Ausführungsform umfassen die passiven Wirkverbindungsmittel mindestens eine quer zur Längsrichtung des Grundkörpers verlaufende Rille und die aktiven Wirkverbindungsmittel eine federnd angeordnete Wippe, welche in montiertem Zustand in die querverlaufende Rille einrastet. Die Wirkverbindungsmittel können so ausgestaltet sein, dass sie selbsttätig einrasten. Zu diesem Zweck kann die Wippe eine Rampe aufweisen. In einer Ausführungsform weist der kabelseitige Grundkörper einen Vorderteil mit einer zylindrischen Aussenfläche und am hinteren Ende einen am Vorderteil angeformten Crimphals auf. Je nach Anwendungsgebiet kann die Aussenfläche auch anders gestaltet sein. Der kabelseitige Grundkörper kann z.B. eine tangential verlaufende Bohrung zum Befestigen eines Einzugdrahtes aufweisen. Der zweite Verbinderteil kann z.B. ein Gehäuse aus Kunststoff aufweisen, an dem mindestens ein aktives Wirkverbindungsmittel integral angeformt ist. In einer Ausführungsform umfasst das aktive Wirkverbindungsmittel eine über ein federndes Gelenk am Gehäuse angeformte Wippe, welche in eine Öffnung zur Aufnahme des ersten Verbinders hineinragt. Das Gehäuse des zweiten Verbinderteils kann eine seitliche Öffnung zur Aufnahme einer Zentrierhülse aufweisen. Alternativ oder in Ergänzung kann das Gehäuse einen mehrteiligen Aufbau aufweisen, so dass die Zentrierhülse eingelegt und das Gehäuse dann verschlossen werden kann. Je nach Anwendungsgebiet kann die Zentrierhülse auch fest in das Gehäuse integriert sein.

Anhand der nachfolgenden Figuren werden Ausführungsbeispiele der Erfindung beschrieben. Es zeigen
- Fig. 1: Einen optischen Verbinder von schräg oben;
- Fig. 2: Den optischen Verbinder gemäss Figur 1 in einer Explosionsdarstellung;
- Fig. 3: Den optischen Verbinder gemäss Figur 1 in einer Draufsicht;
- Fig. 4: Eine Schnittdarstellung durch den optischen Verbinder entlang der Schnittlinie AA gemäss Figur 3;
- Fig. 5: Den Verbinder gemäss Figur 1 in einer teilweise geschnittenen Darstellung.

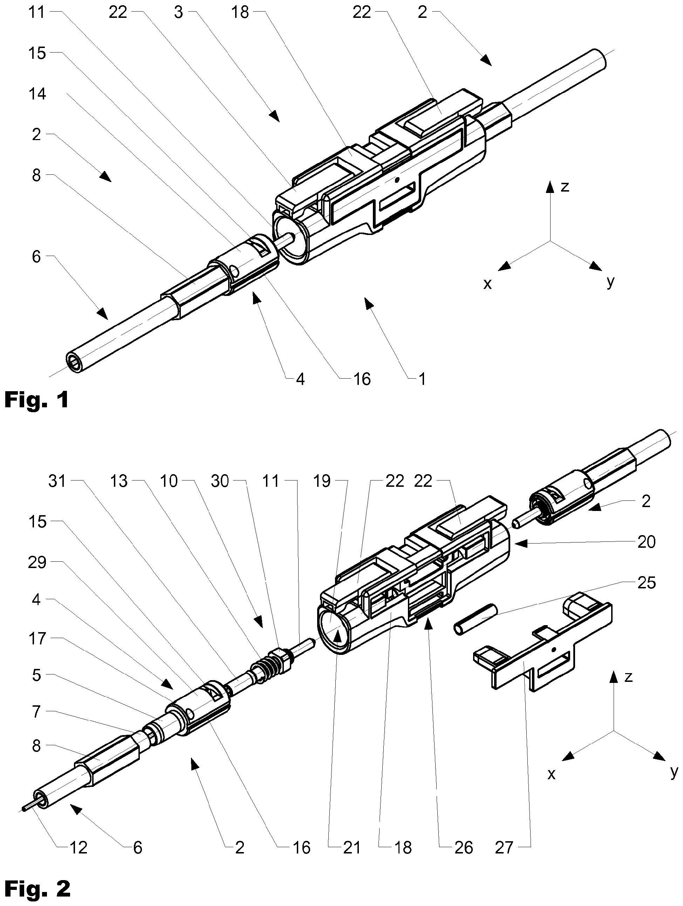

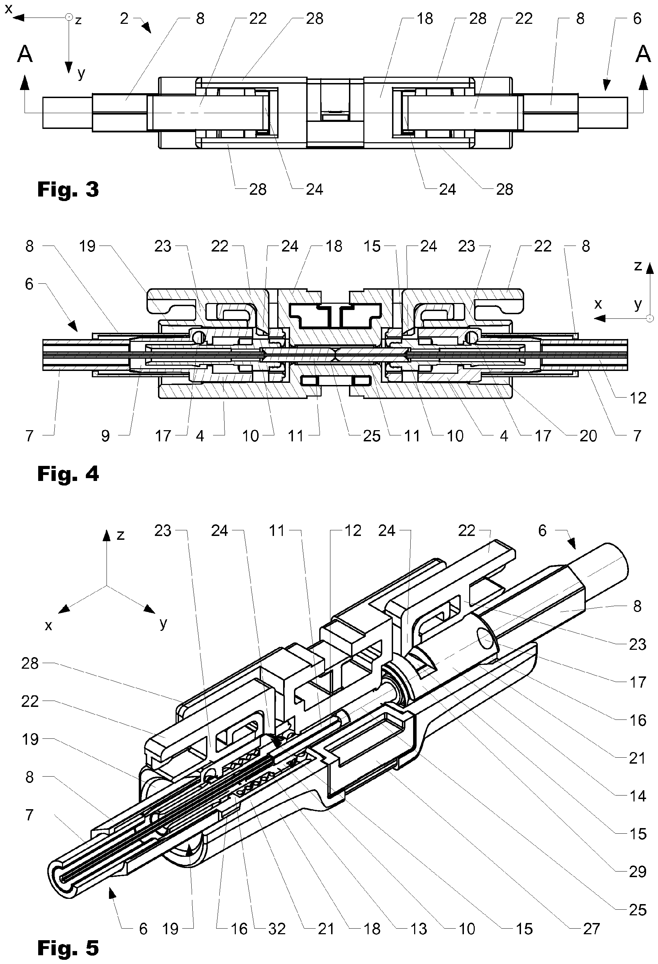

Figur 1 zeigt eine erste Ausführungsform eines erfindungsgemässen optischen Verbinders 1 in einer perspektivischen Darstellung von schräg oben. In **Figur 2** ist der Verbinder 1 gemäss **Figur 1** in einer Explosionsdarstellung gezeigt. In **Figur 3** ist der Verbinder 1 in einer Draufsicht dargestellt. **Figur 4** zeigt eine Schnittdarstellung des Verbinders 1 entlang der Schnittlinie AA gemäss **Figur 3. Figur 5** zeigt den Verbinder 1 teilweise geschnitten, so dass das Innenleben besser ersichtlich ist.

Der Verbinder 1 weist einen kabelseitigen ersten Verbinderteil 2, sowie einen buchsenseitigen zweiten Verbinderteil 3 auf. In der gezeigten Ausführungsform handelt es sich beim buchsenseitigen zweiten Verbinderteil 3 um einen Adapter 3 mittels dem zwei erste Verbinderteile 2 miteinander wirkverbunden werden können. Der zweite Verbinderteil 3 kann auch als Buchse ausgestaltet und zur Befestigung, bzw. Integration in ein Gehäuse eines Gerätes vorgesehen sein. In der gezeigten Ausführungsform weist der Adapter 3 mit Bezugnahme auf die Längsrichtung einen im wesentlichen symmetrischen Aufbau auf und eignet sich zum Wirkverbinden von zwei ersten Verbinderteilen 2.

Der erste Verbinderteil 2 weist einen hier zylindrischen Grundkörper 4 auf, der ein Grundkörpervorderteil 29 aufweist und am hinteren Ende in einen Crimphals 5 mündet. Am Crimphals 5 kann ein Kabel 6 befestigt werden, indem ein Kabelmantel 7 des Kabels 6 mittels einer Crimphülse 8 zwischen dem Crimphals 5 und der Crimphülse 8 festgeklemmt wird. Der hier zylindrische Grundkörper weist im Innern eine in Längsrichtung (x-Richtung) verlaufende, durchgehende Öffnung 9 auf. Diese ist im vorderen Bereich des Grundkörpers 4 so ausgestaltet, dass sie einen Ferrulenhalter 10 und eine an diesem befestigte Ferrule 11 aufnehmen kann. Die röhrenförmig ausgestaltete Ferrule 11 dient zur präzisen Halterung einer optischen Faser 12 des Kabels 6. Der Ferrulenhalter 10 weist in der gezeigten Ausführungsform einen rechteckigen Ferrulenhaltervorderteil 30 an dem ein zylindrischer Ferrulenhalterhinterteil 31 angeformt ist. Die Ausgestaltung des Ferrulenhaltervorderteils 30 korrespondiert mit dem Querschnitt der durchgehenden Öffnung 9 des Grundkörpers 4 und verhindert, dass sich der Ferrulenhalter 10 gegenüber dem Grundkörper 4 ungewollt verdrehen kann. Je nach Anwendungsgebiet kann der Ferrulenhalter 10 gegenüber dem Grundkörper auch drehbar ausgestaltet sein. Zwischen dem Ferrulenhalter 10 und dem Grundkörper 4 ist eine Feder 13 angeordnet, welche den Ferrulenhalterhinterteil 31 umgibt und sich nach vorne am Ferrulenhaltervorderteil 30 abstützt. Nach hinten stützt sich die Feder 13 an einer Stufe (Querschnittsverengung) 32 im Innern der Öffnung 9 ab. Der Ferrulenhalter 10, respektive die Ferrule 11 kann gegen die Kraft der Feder 13 in Längsrichtung gegenüber dem Grundkörper 4 in definiertem Maas verschoben werden.

Der Grundkörper 4 weist an einer zylindrischen Aussenfläche 14 erste Wirkverbindungsmittel 15 auf, mittels denen der erste Verbinderteil 2 mit dem zweiten Verbinderteil 3 wirkverbunden werden kann. Bei den ersten Wirkverbindungsmitteln 15 handelt es sich in der gezeigten Ausführungsform um eine quer verlaufende Rille, welche in axialer Richtung in etwa auf der Höhe des Ferrulenhalters angeordnet ist. Weiterhin weist der erste Verbinderteil 2 erste Führungsmittel 16 in Form von zwei in die zylindrische Aussenfläche 14 eingelassene, einander diametral gegenüberliegende, längsverlaufende Rillen auf. Diese dienen zur Positionierung und Ausrichtung des ersten gegenüber dem zweiten Verbinderteils 2, 3.

Anstelle einer zylindrischen können auch anders ausgestaltete Aussenflächen 14 vorgesehen werden. Z.B. besteht die Möglichkeit einen von einer Kreisform abweichenden Querschnitt zu verwenden, solange die präzise Halterung gewährleistet bleibt.

In der gezeigten Ausführungsform handelt es sich beim zweiten Verbinderteil 3 um einen Adapter, welcher zum Wirkverbinden von zwei ersten Verbinderteilen 2 dient. Der zweite Verbinderteil 3 weist ein Gehäuse 18 auf, welches zwei gegenüberliegende koaxial angeordnete Öffnungen 19, 20 aufweist. Die Öffnungen 19, 20 dienen, wie in den **Figuren 3** bis **5** dargestellt, zur Aufnahme von ersten Verbinderteilen 2 und korrespondieren mit den zylindrischen Aussenflächen, so dass die ersten Verbinder präzise gehalten werden. Im Innern der Öffnungen 19, 20 sind zweite Führungsmittel 21 (nach innen vorstehende, in Längsrichtung verlaufende Wulste) angeordnet, welche zu den ersten Führungsmitteln 16 korrespondierend ausgestaltet sind und mit diesen beim Wirkverbinden der Verbinderteile 2, 3 in Eingriff treten.

Der zweite Verbinderteil 3 weist zweite Wirkverbindungsmittel 22 auf, welche in der gezeigten Ausführungsform als am Gehäuse 18 angeformte Wippen 22 ausgestaltet sind. Die zweiten Wirkverbindungsmittel 22 können auch als separate Elemente ausgestaltet sein. Die Wippen 22 sind mit dem Gehäuse 18 über ein federndes Gelenk 23 wirkverbunden. Am vorderen Ende weist die Wippe 22 einen Rastzahn 24 auf, welcher in Form einer Sperrklinke die erste, respektive zweite Öffnung 19, 20 hinein ragt und beim Einstecken (x-Richtung) der ersten Verbinderteile 2 in die als erstes Wirkverbindungsmittel dienende querverlaufende Rille 15 einrastet. Im Unterschied zu den kabelseitigen, passiven ersten Wirkverbindungsmitteln 15 handelt es sich bei den zweiten Wirkverbindungsmitteln 22 um aktive Wirkverbindungsmittel im Sinne einer beweglichen Sperrklinke oder dergleichen, welche für die Ver-, bzw. Entriegelung des ersten gegenüber dem zweiten Verbinderteils zuständig sind. Bei den passiven ersten Wirkverbindungsmitteln 15 handelt es sich um Rillen und/oder querverlaufende Rippen, in welche die aktiven zweiten Wirkverbindungsmittel einrasten können. Der erfindungsgemässe Aufbau des optischen Verbinders ermöglicht einen einfachen, kostengünstigen Aufbau mit einem geringen Aussendurchmesser. Bei Bedarf können auch mehr als eine Sperrklinke vorgesehen sein. Die Sperrklinken können auf dem Umfang gleichmässig verteilt angeordnet sein. In der gezeigten Ausführungsform ist die Wippe 22 in den Aussenbereich des Gehäuses 18 eingelassen. Seitlich angeordnete Schutzwände 28 schützten die Wippe vor äusseren Einflüssen und verhindern ein ungewolltes Entriegeln der Wippe 22.

Beim Einstecken der ersten Verbinderteile 2 in den zweiten Verbinderteil 3 werden die Ferrule 11 in der gezeigten Ausführungsform von beiden Seiten in eine Zentrierhülse 25 eingeschoben. Die Zentrierhülse 25 ist als separates Teil ausgestaltet und wird in der gezeigten Ausführungsform, wie in **Figur 2** dargestellt, von der Seite her (y-Richtung) in eine Montageöffnung 26 des Gehäuses 18 eingesetzt und dort mit einem Halter 27 fixiert. Das Gehäuse 18 kann auch mehrteilig ausgestaltet sein, so dass die Zentrierhülse 25 eingelegt und das Gehäuse 18 dann geschlossen werden kann. Je nach Anwendungsgebiet können die Zentriermittel (Zentrierhülse) für die beiden Ferrulen 11 der ersten Verbinderteile 2 auch am Gehäuse 18 angeformt sein.

**LISTE DER BEZUGSZEICHEN**

| | | | |
|---|---|---|---|
| 1 | Optischer Verbinder | 17 | Quer verlaufende Bohrung für Einzugsdraht |
| 2 | Erster Verbinderteil (kabelseitig) | 18 | Gehäuse |
| 3 | Zweiter Verbinderteil (Adapter, bzw. gehäuseseitig) | 19 | Erste Öffnung |
| 4 | Grundkörper | 20 | Zweite Öffnung |
| 5 | Crimphals | 21 | Zweite Führungsmittel (vorstehende Wulste) |
| 6 | Kabel | 22 | Zweite Wirkverbindungsmittel (Wippen) |
| 7 | Kabelmantel | 23 | Federndes Gelenk |
| 8 | Crimphülse | 24 | Rastzahn |
| 9 | Durchgehende Öffnung | 25 | Zentrierhülse |
| 10 | Ferrulenhalter | 26 | Montageöffnung |
| 11 | Ferrule | 27 | Halter |
| 12 | Optische Faser (Lichtwellenleiter) | 28 | Schutzwand |
| 13 | Feder | 29 | Grundkörpervorderteil |
| 14 | Zylindrische Aussenfläche | 30 | Ferrulenhaltervorderteil |
| 15 | Erste Wirkverbindungsmittel (querverlaufende Rillen) | 31 | Ferrulenhalterhinterteil |
| 16 | Erste Führungsmittel (längsverlaufende Rillen) | 32 | Stufe |

## Patentansprüche

1. Optischer Verbinder (1) mit mindestens einem kabelseitigen ersten und einem gehäuseseitigen zweiten Verbinderteil (2, 3), zum stirnseitigen Wirkverbinden von zwei Lichtwellenleitern (12), wobei der kabelseitige erste Verbinderteil (2) einen Grundkörper (4) mit passiven ersten Wirkverbindungsmitteln (15) und einer in einer Längsrichtung des Grundkörper (4) durchgehenden Öffnung (9) angeordnete Ferrule (11) aufweist, welche gegen die Kraft einer Feder (13) in Längsrichtung (x) gegenüber dem Grundkörper (4) verschiebbar gelagert angeordnet ist, und wobei der gehäuseseitige zweite Verbinderteil (3) aktive Wirkverbindungsmittel (22) aufweist, welche zum Ver- bzw. Entriegeln des ersten Verbinderteils (2) mit den ersten Wirkverbindungsmitteln (15) korrespondieren wobei der kabelseitige erste Verbinderteil (2) und der gehäuseseitige zweite Verbinderteil (3) derart ausgebildet sind, dass der kabelseitige erste Verbinderteil (2) in den gehäuseseitigen zweiten Verbinderteil (3) einsteckbar ist und der Vorderteil (2) des Grundkörpers (4) in Längsrichtung (x) verlaufende erste Führungsmittel (16) aufweist, welche in montiertem Zustand mit im Innern einer Öffnung (19, 20) des zweiten Verbinderteils (3) angeordneten zweiten Führungsmitteln (21) zusammenwirken und ein ungewolltes Verdrehen des ersten gegenüber dem zweiten Verbinderteil (2, 3) verhindern.

2. Optischer Verbinder (1) gemäss Patentanspruch 1, **dadurch gekennzeichnet, dass** die passiven Wirkverbindungsmittel (15) eine quer zur Längsrichtung des Grundkörpers verlaufende Rille (15) und die aktiven Wirkverbindungsmittel (22) eine federnd angeordnete Wippe (22) umfassen, welche in montiertem Zustand in die querverlaufende Rille (15) einrastet.

3. Optischer Verbinder (1) gemäss einem der vorangehenden Patentansprüche, **dadurch gekennzeichnet, dass** der Grundkörper (4) einen Vorderteil mit einer zylindrischen Aussenfläche (14) und einen am Vorderteil angeformten Crimphals (5) aufweist.

4. Optischer Verbinder (1) gemäss einem der vorangehenden Patentansprüche, **dadurch gekennzeichnet, dass** der Grundkörper (4) eine quer zur Längsrichtung verlaufende Bohrung (17) zum Befestigen eines Einzugdrahtes aufweist.

5. Optischer Verbinder (1) gemäss einem der vorangehenden Patentansprüche, **dadurch gekennzeichnet, dass** der zweite Verbinderteil (3) ein Gehäuse (18) aufweist, an dem mindestens ein aktives Wirkverbindungsmittel (22) integral angeformt ist.

6. Optischer Verbinder (1) gemäss Patentanspruch 5, **dadurch gekennzeichnet, dass** das aktive Wirkverbindungsmittel (22) eine über ein federndes Gelenk am Gehäuse angeformte Wippe (22) ist, welche in eine Öffnung (19, 20) zur Aufnahme eines ersten Verbinderteils (2) hineinragt.

7. Optischer Verbinder (1) gemäss Patentanspruch 5 oder 6, **dadurch gekennzeichnet, dass** das Gehäuse (18) eine seitliche Montageöffnung (26) zur Aufnahme einer Zentrierhülse (25) aufweist.

8. Optischer Verbinder (1) gemäss einem der vorangehenden Patentansprüche, **dadurch gekennzeichnet, dass** der Durchmesser eines Grundkörpervorderteils (29) des Grundkörpers (4) ≤ 2.5-fache des Durchmessers des Crimphalses (5) entspricht.

## Claims

1. An optical connector (1) having at least one cable-side first connector part and one housing-side second connector part (2, 3) for operatively connecting two fiber optic cables (12) end-to-end, wherein the cable-side first connector part (2) has a base body (4) having passive first operative connecting means (15) and a ferrule (11), which is arranged in an opening (9) traversing the base body (4) in a longitudinal direction and which is mounted so as to be slidable against the force of a spring (13) in a longitudinal direction (x) relative to the base body (4), and wherein the housing-side second connector part (3) has active operative connecting means (22) which communicate with the first operative connecting means (15) for locking or releasing the first connector part (2), wherein the cable-side first connector part (2) and the housing-side second connector part (3) are configured in such a way that the cable-side first connector part (2) can be plugged into the housing-side second connector part (3) and the front part (2) of the base body (4) has first guide means (16) extending in a longitudinal direction (x), which in the assembled state cooperate with second guide means (21) arranged in the interior of an opening (19, 20) of the second connector part (3) and prevent an undesired twisting of the first relative to the second connector part (2, 3).

2. The optical connector (1) according to Claim 1, **characterized in that** the passive operative connecting means (15) comprise a groove (15) extending transversely to the longitudinal direction of the base body and the active operative connecting means (22) comprise a spring-mounted rocker (22), which in the assembled state engages in the transverse groove (15).

3. The optical connector (1) according to any one of the preceding claims, **characterized in that** the base body (4) has a front part having a cylindrical outer area (14) and a crimping neck (5) formed on the front part.

4. The optical connector (1) according to any one of the preceding claims, **characterized in that** the base body (4) has a drilled hole (17) extending transversely to the longitudinal direction for fastening a pull wire.

5. The optical connector (1) according to any one of the preceding claims, **characterized in that** the second connector part (3) has a housing (18), on which at least one active operative connecting means (22) is integrally formed.

6. The optical connector (1) according to Claim 5, **characterized in that** the active operative connecting means (22) is a rocker (22) which is formed on the housing by an elastic joint and which projects into an opening (19, 20) for receiving a first connector part (2) .

7. The optical connector (1) according to Claim 5 or 6, **characterized in that** the housing (18) has a lateral installation opening (26) for receiving a centering sleeve (25).

8. The optical connector (1) according to any one of the preceding claims, **characterized in that** the diameter of a base body front part (29) of the base body (4) is ≤ 2.5 times the diameter of the crimping neck (5).

## Revendications

1. Connecteur optique (1) pourvu au moins côté câble d'une première et côté boîtier d'une deuxième partie de connecteur (2, 3), destinées à être amenées en liaison active sur la face frontale de deux fibres optiques (12), la première partie de connecteur (2) côté câble comportant un corps de base (4) pourvu de premiers moyens passifs de liaison active (15) et d'une virole (11) placée dans un orifice (9) traversant dans la direction longitudinale du corps de base (4), qui est placée en étant déplaçable dans la direction longitudinale (x) par rapport au corps de base (4) à l'encontre de la force d'un ressort (13), et la deuxième partie de connecteur (3) côté boîtier comportant des moyens actifs de liaison active (22), qui pour verrouiller ou déverrouiller la première partie de connecteur (2) correspondent avec les premiers moyens de liaison active (15), la première partie de connecteur (2) côté câble et la deuxième partie de connecteur (3) côté boîtier étant conçues de telle sorte que la première partie de connecteur (2) côté câble soit enfichable dans la deuxième partie de connecteur (3) côté boîtier et que la partie avant (2) du corps de base (4) comporte des premiers moyens de guidage (16) s'écoulant dans la direction longitudinale (x), lesquels en position montée coopèrent avec des deuxièmes moyens de guidage (21) placés à l'intérieur d'un orifice (19, 20) de la deuxième partie de connecteur (3) et empêchent une rotation intempestive de la première par rapport à la deuxième partie de connecteur (2, 3).

2. Connecteur optique (1) selon la revendication 1, **caractérisé en ce que** les moyens passifs de liaison active (15) comprennent une cannelure (15) s'écoulant à la transversale de la direction longitudinale du corps de base et les moyens actifs de liaison active (22) comprennent une bascule (22) placée élastiquement, laquelle s'enclenche en position montée dans la cannelure (15) s'écoulant à la transversale.

3. Connecteur optique (1) selon l'une quelconque des revendications précédentes, **caractérisé en ce que** le corps de base (4) comporte une partie avant dotée d'une surface extérieure (14) cylindrique et un collet à sertir (5) surmoulé sur la partie avant.

4. Connecteur optique (1) selon l'une quelconque des revendications précédentes, **caractérisé en ce que** le corps de base (4) comporte un perçage (17) s'écoulant à la transversale de la direction longitudinale, destiné à fixer un tire-fil.

5. Connecteur optique (1) selon l'une quelconque des revendications précédentes, **caractérisé en ce que** la deuxième partie de connecteur (3) comporte un boîtier (18) sur lequel est surmoulé intégralement au moins un moyen actif de liaison active (22).

6. Connecteur optique (1) selon la revendication 5, **caractérisé en ce que** le moyen actif de liaison active (22) est une bascule (22) surmoulée sur le boîtier par l'intermédiaire d'une articulation élastique, laquelle saillit à l'intérieur d'un orifice (19, 20) destiné à recevoir une première partie de connecteur (2).

7. Connecteur optique (1) selon la revendication 5 ou 6, **caractérisé en ce que** le boîtier (18) comporte un orifice de montage (26) latéral, destiné à recevoir une douille de centrage (25).

8. Connecteur optique (1) selon l'une quelconque des revendications précédentes, **caractérisé en ce que** le diamètre d'une partie avant de corps de base (29) du corps de base (4) est ≤ 2.5 fois le diamètre du collet à sertir (5).
